# EUROPÄISCHE PATENTSCHRIFT

(11) **EP 3 065 988 B1**
(45) Veröffentlichungstag und Bekanntmachung des Hinweises auf die Patenterteilung: **03.01.2024**
(21) Anmeldenummer: 14793151.3
(22) Anmeldetag: 04.11.2014
(51) Int. Cl.: B60W 50/10, B60K 26/02, B60W 30/14

(54) **VERFAHREN UND VORRICHTUNG ZUR STEUERUNG EINER FAHRGESCHWINDIGKEIT EINER LANDWIRTSCHAFTLICHEN MASCHINE**
METHOD AND DEVICE FOR CONTROLLING A VELOCITY OF AN AGRICULTURAL MACHINE
PROCÉDÉ ET DISPOSITIF DE COMMANDE DE LA VITESSE D'AVANCE D'UNE MACHINE AGRICOLE

(30) Priorität: 06.11.2013 DE 102013112184
(43) Veröffentlichungstag der Anmeldung: 14.09.2016
(73) Patentinhaber: HORSCH LEEB Application Systems GmbH, 94405 Landau an der Isar (DE)
(72) Erfinder: LEEB, Theodor, 94562 Oberpöring (DE); HIRTHAMMER, Otto, 93128 Hirschling (DE)
(74) Vertreter: Benninger, Johannes
(86) Internationale Anmeldenummer: PCT/EP2014/073714
(87) Internationale Veröffentlichungsnummer: WO 2015/067607

(56) Entgegenhaltungen:
- WO-A2-2012/096514
- WO-A2-2012/096518
- JP-A- H03 275 960

## Beschreibung

Die vorliegende Erfindung betrifft ein Verfahren und eine Vorrichtung zur Steuerung einer Fahrgeschwindigkeit einer landwirtschaftlichen Maschine.

Bekannte landwirtschaftliche Zugmaschinen wie bspw. Traktoren oder selbstfahrende landwirtschaftliche Arbeitsmaschinen wie Pflanzenschutzspritzen, Erntemaschinen etc. weisen häufig sog. stufenlose Fahrantriebe auf, die wiederum die Ausstattung derartiger Maschinen mit stufenlos arbeitenden Getrieben bedingen. Häufig sind derartige Fahrantriebe auch als sog. hydrostatische Fahrantriebe oder als hydraulisch stufenlose Antriebe ausgelegt.

Für den Fahrer einer solchen Maschine stehen üblicherweise die bekannten Fahrpedale zur Verfügung, die zumindest ein sog. Gaspedal, d.h. ein Fahrpedal für die Geschwindigkeitssteuerung, sowie ein Bremspedal umfassen. Das Fahrpedal stellt eine Steuer- oder Regelverbindung zu einer Motor- und/oder Getriebesteuerung dar, während das Bremspedal zumindest mit einem hydraulischen Bremssystem zusammenwirkt, ggf. auch mit weiteren Betriebs- oder Dauerbremseinrichtungen. Neben diesen bekannten Fußpedalen gibt es weitere Betätigungsmittel zur Fahrantriebs- und/oder Bremssteuerung, die als sog. Bedienjoystick bezeichnet werden können. Hierbei handelt es sich um einen in mehrere Richtungen schwenkbaren und/oder um einen definierten Winkel verdrehbaren Handhebel, der eine Steuerung der Maschine mit nur einer Hand erlaubt, so dass weitgehend alle manuellen Steuereingriffe, die mit der reinen Fahrfunktion der Maschine zusammenhängen - das sind die Geschwindigkeitssteuerung und das Abbremsen der Maschine -, mit dem Handhebel bzw. mit dem sog. Joystick erledigt werden können. Die Maschinen sind in der Regel so konzipiert das diese jeweils ein Fahrpedal und einen Bedienjoystick aufweisen, wobei der Joystick wiederum viele verschiedene Funktionen haben kann.

Eine bevorzugte Bauform des Joysticks sieht vor, dass durch dessen Bewegung nach vorne oder nach hinten (in Fahrtrichtung), das Fahrzeug beschleunigt oder verzögert werden kann. Bei herkömmlichen Steuerungen von Fahrzeugen erfolgt die Beschleunigung oder Verzögerung des Fahrzeugs mittels des Fahrpedals (Gaspedal). Wird dieses gedrückt, beschleunigt das Fahrzeug; wird dieses nicht gedrückt (durchgeschwenkt), rollt das Fahrzeug aus, bis es stehen bleibt; es findet jedoch keine aktive Verzögerung (Bremsung) statt.

Bei vielen Maschinen ist es bereits Stand der Technik, dass der Fahrer der Maschine entscheiden kann, ob er eine Geschwindigkeitsänderung mit dem Joystick oder mit dem Fahrpedal durchführen möchte. Hierzu muss er jedoch jeweils mittels bspw. eines zusätzlichen Steuerschalter separat auswählen, ob er mit dem Joystick oder mit dem Fahrpedal eine Geschwindigkeitsänderung durchführen möchte bzw. die Maschine fahren möchte. Diese manuelle Umschaltung ist umständlich und vor allem im Hinblick auf den Fahrkomfort nachteilig. Zudem kann es zu Fehlbedienungen beitragen, insbesondere in Situationen, bei denen der Fahrer durch andere Ereignisse abgelenkt ist.

Die EP 2 664 769 A2 offenbart ein Verfahren zur Steuerung einer Fahrgeschwindigkeit einer landwirtschaftlichen Maschine. Es sind jeweils Sensoren am Gaspedal und am Handhebel zur Messung der eingestellten Geschwindigkeiten durch den Bediener vorgesehen. Der höchste der eingestellten Werte wird von der Steuereinrichtung erkannt und dient als Grundlage zur Ansteuerung des Motors.

Die DE 60 2005 002 867 T2 offenbart ein Kontroll- bzw. Steuersystem für Fahrzeuge wie Traktoren, die mit Fußpedalsteuerungen ausgestattet sind. Eine zusätzliche Handsteuervorrichtung kann von anderen Steuerelementen übersteuert werden.

Ein Benutzer-Interface zur Steuerung eines Fahrzeugs geht aus der DE 10 2009 006 371 A1 hervor. Das Benutzer-Interface sieht eine Fußpedalsteuerung sowie eine Handhebelsteuerung vor, die um weitere Eingabevorrichtungen wie Schalter, Knöpfe, Tastaturen etc. ergänzt sein können.

Weitere Eingabe- und Steuersysteme für Fahrzeuge sind z.B. aus der US 2006/ 0095186 A1, aus der US 2007/ 0289803 A1, aus der US 2010/ 0313693 A1 sowie aus der DE 10 2012 103 070 A1 bekannt.

Ein vorrangiges Ziel der Erfindung besteht in der Schaffung eines zuverlässigen und sicheren Betätigungskonzepts für die Steuerung von Fahrfunktionen einer landwirtschaftlichen Maschine, die sowohl für eine Handbetätigung als auch für eine alternative Fußbetätigung vorbereitet ist. Beide Betätigungsarten sollen gleichermaßen ermöglicht werden, insbesondere in Abhängigkeit der jeweils vom Fahrer bevorzugten Betätigungsart.

Dieses Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen. Zur Erreichung des genannten Ziels schlägt die Erfindung ein Verfahren zur Steuerung einer Fahrgeschwindigkeit einer landwirtschaftlichen Maschine vor, wobei sich das Verfahren insbesondere zur Fahrgeschwindigkeitsteuerung bei einer landwirtschaftlichen Zugmaschine oder einer selbstfahrenden Arbeitsmaschine, wahlweise auch bei Baumaschinen und anderen selbstfahrenden Arbeitsmaschinen eignet. Die landwirtschaftliche Maschine, auf die sich das erfindungsgemäße Verfahren bezieht, ist an einem Fahrerplatz zumindest mit einem Fahrpedal und einem Bremspedal zur Fußbetätigung sowie mit wenigstens einem Handhebel ausgestattet. Die wenigstens zwei Fußpedale und der Handhebel dienen jeweils der Beeinflussung der Fahrgeschwindigkeit durch entsprechende Fahrbefehle des Maschinenführers. Dabei wird durch Niederdrücken des Fahrpedals, des sog. Gaspedals, die Fahrgeschwindigkeit normalerweise erhöht, wogegen sich die Fahrgeschwindigkeit beim Lösen des Pedals reduzieren soll, indem ein Antriebsmotor der landwirtschaftlichen Maschine in einen Schub- oder Schleppbetrieb übergeht, was auch als sog. Motorbremse bezeichnet wird. Durch Treten des Bremspedals kann die Fahrgeschwindigkeit aktiv reduziert werden, indem das Bremspedal eine Aktivierung der Radbremsen und/oder aktiver Bremseinrichtungen des Fahrzeugs, z.B. eine Dauerbremse, auslöst. Der Handhebel, der auch als Joystick bezeichnet werden kann, weil er an einen solchen Joystick erinnert, kann zur Erhöhung der Fahrgeschwindigkeit nach vorne gedrückt und zur Reduzierung der Fahrgeschwindigkeit zum Fahrer hin gezogen werden (oder wahlweise auch umgekehrt), wobei diese Fahrgeschwindigkeitsreduzierung wahlweise nur auf einer aktivierten Motorbremse oder auch auf einer zusätzlichen Aktivierung der Betriebsbremsen bzw. der Radbremsen des Fahrzeuges beruhen kann.

Wahlweise kann der Handhebel bzw. Joystick auch eine andere Betätigungslogik aufweisen; so kann bspw. eine Geschwindigkeitserhöhung oder eine Geschwindigkeitsreduzierung auch durch seitliches oder diagonales Schwenken oder durch andere Bewegungsrichtungen vorgegeben werden.

Das erfindungsgemäße Verfahren sieht vor, dass die jeweils zuletzt erfolgte Betätigung eines der Fußpedale oder des Handhebels durch den Maschinenführer mit einer Änderungsanforderung der Fahrgeschwindigkeit eine Vorrangsteuerung definiert und eine Verbindung der Fahrgeschwindigkeitssteuerung zur jeweils anderen Betätigungsart zumindest solange unterdrückt, bis durch den Maschinenführer eine geänderte Anforderung durch entsprechende Betätigung eines der Fußpedale oder des Handhebels erfolgt. Das landwirtschaftliche Fahrzeug ist so ausgestattet, dass es entweder mit dem Fahrpedal oder mit dem Joystick gefahren werden kann. Ein Umschalten erfolgt jedoch ohne zusätzliche Betätigung eines separaten Schalters o. dgl., sondern vorrangig nur auf Grundlage einer Auswertung der vom Fahrzeugführer vorgenommenen Betätigungsschritte, wobei ggf. Einschränkungen vorgesehen sein können, die in ihren Varianten weiter unten näher erläutert werden.

Mit dem verwendeten Begriff der "Vorrangsteuerung" ist in diesem Zusammenhang die Auswahl der jeweils "aktiven" Bedien- bzw. Betätigungselemente gemeint; d.h. die Vorrangsteuerung definiert durch das entsprechende Betätigungsverhalten des Fahrzeugführers, ob die Fahrbefehle jeweils durch den Handhebel oder durch die Fußpedale erfolgen und umgesetzt werden sollen. Betätigt der Fahrer den Handhebel, so bleibt dieser auch für die weitere Fahrzeugsteuerung maßgeblich bzw. "aktiv", bis der Fahrer zu einem späteren Zeitpunkt ggf. eines der Fußpedale betätigt. In diesem Fall sieht die Vorrangsteuerung ein Umschalten vor, so dass für die weitere Fahrzeugsteuerung Fahrbefehle maßgeblich bleiben, die über die Fußpedale erfolgen, so dass diese zunächst "aktiv" geschaltet sind, während der Handhebel deaktiviert ist. Umgekehrt ist bei aktiviertem Handhebel und entsprechend gesteuertem Vorrang der Fußpedalsatz deaktiviert bzw. "inaktiv".

So sieht das Verfahren vor, dass eine Betätigung eines der Fußpedale oder des Handhebels mit einer gleichzeitig erfolgenden definierten Lageänderung als Änderungsanforderung interpretiert wird, welche die Vorrangsteuerung des jeweils betätigten Pedals oder des Handhebels auslöst. Die sensierte Lageänderung, die auf einer Betätigung durch den Fahrer beruht, sollte einen definierten Mindestwert nicht unterschreiten, um keine zu sensible Steuerungscharakteristik zu erzeugen. Vielmehr ist es sinnvoll, einen Mindestweg am Handhebel von bspw. zwei bis vier Millimetern und einen entsprechenden Mindestweg an den Fußpedalen von einigen Millimetern vorzusehen, die als Betätigung interpretiert werden und die entsprechende Vorrangsteuerung aktivieren. Auf diese Weise wird verhindert, dass ein mechanisches Pedalspiel oder ein Leerweg im Handhebel unberücksichtigt bleibt und zu einem ungünstigen Steuerungsverhalten führen kann.

Eine alternative Möglichkeit der Vorrangsteuerung kann auch eine zeitabhängige Steuerung vorsehen, so dass nach einem definierbaren Zeitraum von bspw. drei, vier oder fünf Sekunden nach einer entsprechenden Betätigung eines der Betätigungselemente das jeweils andere in einen inaktiven Zustand versetzt wird. So kann bspw. bei aktivierten Fußpedalen und inaktivem Handhebel dessen Betätigung überwacht werden, wobei nach dem definierten Zeitraum von bspw. fünf Sekunden nach der Handhebelbetätigung die Fußpedale deaktiviert werden, bis sie wieder erneut vom Fahrzeugführer betätigt werden.

Eine weitere Variante des Verfahrens kann einen zusätzlichen Vorwahlschalter für eine Festlegung einer Fahrtrichtung der landwirtschaftlichen Maschine vorsehen, der hinsichtlich der Vorrangsteuerung gegenüber dem Handhebel den wenigstens zwei Fußpedalen zugeordnet ist. In diesem Zusammenhang kann es sinnvoll sein, wenn die Fußpedale nach einer Betätigung des Vorwahlschalters durch den Maschinenführer einen Vorrang gegenüber dem Handhebel erhalten, so dass die Fußpedale solange Vorrang behalten, bis der Handhebel nach Betätigung des Vorwahlschalters erstmalig betätigt wurde. Sobald dies der Fall ist, erhält er den Vorrang gegenüber den übrigen Betätigungseinrichtungen.

Bei dem erfindungsgemäßen Verfahren ist es sinnvoll, zunächst die generell vorhandenen Steuerungsmöglichkeiten in sog. "Fahrstrategien" zu unterteilen. So gibt es eine "Fahrstrategie Joystick" und eine "Fahrstrategie Fahrpedal". Es kann darüber hinaus noch eine dritte "Fahrstrategie Tempomat" geben, die jedoch keiner gesonderten Maßnahmen bedarf.

Der Fahrstrategie Fahrpedal sind folgende Steuerungseinheiten zugeordnet: der Fahrtrichtungsschalter (Vorwahlmöglichkeit, Vorwärtsfahrt- Rückwärtsfahrt), das Fahrpedal bzw. Gaspedal (Geschwindigkeitsänderung, Drehzahländerung) sowie das Bremspedal (Verzögerung).

Der Fahrstrategie Joystick ist vorzugsweise nur der Joystick zugeordnet.

Darüber hinaus kann die landwirtschaftliche Maschine noch mit einem Steuerungsrechner ausgestattet sein, mit dessen Hilfe die Ansteuerung bzw. die Regelung der Maschine erfolgt. Durch Berührung einer Steuerungseinheit bzw. des Joysticks erfolgt mittels des Steuerungsrechners eine Zuordnung in die jeweilige Fahrtstrategie. Die Geschwindigkeitsänderung erfolgt dann mit der jeweils der Fahrstrategie zugeordneten Steuerungseinheit. Der Fahrer muss hierzu keine zusätzlichen Schalter oder dergl. betätigen, sondern eine einmalige Berührung einer Steuerungs- bzw. Betätigungseinheit genügt.

Wahlweise kann darüber hinaus vorgesehen sein, dass mittels einer Vorwahl durch ein Steuerungsprogramm und/oder durch Überschreiten einer definierbaren Grenzgeschwindigkeit zwischen einer Straßenfahrt und einer Feldfahrt unterschieden wird, was gleichzeitig mit einer geänderten Vorrangsteuerung verknüpft wird. Bei dieser Variante des Verfahrens wird vorzugsweise während einer Straßenfahrt und/oder bei Überschreiten der definierten Grenzgeschwindigkeit die Maschinensteuerung mittels Handhebel deaktiviert und durch die Maschinensteuerung mittels Fußpedale ersetzt, um auf diese Weise insbesondere gesetzlichen Vorgaben zu genügen, die eine Fahrgeschwindigkeitssteuerung und Abbremsung der Maschine mittels Fußpedalen fordern.

Weiterhin schlägt die Erfindung zur Erreichung des oben genannten Ziels eine landwirtschaftliche Maschine, insbesondere eine landwirtschaftliche Zugmaschine oder selbstfahrende Arbeitsmaschine vor, die an einem Fahrerplatz zumindest mit einem Fahrpedal und einem Bremspedal zur Fußbetätigung sowie mit wenigstens einem Handhebel ausgestattet ist. Die Pedale und der Handhebel dienen jeweils der Beeinflussung der Fahrgeschwindigkeit durch entsprechende Fahrbefehle des Maschinenführers. Außerdem sind die Fußpedale und der Handhebel mit einer Steuerungseinrichtung verknüpft, die eine Vorrangsteuerung durch die Fußpedale oder durch den Handhebel auf Grundlage der jeweils zuletzt erfolgten Betätigung eines der Fußpedale oder des Handhebels durch den Maschinenführer mit einer Änderungsanforderung der Fahrgeschwindigkeit vorsieht. Zudem kann die landwirtschaftliche Maschine einen Vorwahlschalter für eine Festlegung einer Fahrtrichtung der landwirtschaftlichen Maschine aufweisen, der hinsichtlich der Vorrangsteuerung gegenüber dem Handhebel den wenigstens zwei Fußpedalen zugeordnet ist.

Weiterhin kann die Steuerungseinrichtung der landwirtschaftlichen Maschine eine Vorwahl und/oder eine definierbare Grenzgeschwindigkeit zur Unterscheidung zwischen einer Straßenfahrt und einer Feldfahrt berücksichtigen. Dabei ist es sinnvoll, bei einer Straßenfahrt und/oder bei einer Fahrt mit einer Geschwindigkeit oberhalb der definierten Grenzgeschwindigkeit eine Handhebelsteuerung zu unterdrücken.

Weiterhin ist zu erwähnen, dass die landwirtschaftliche Maschine nicht zwingend ein stufenloses Getriebe aufweisen muss. Um die Erfindung realisieren zu können, genügt es vielmehr, wenn die Möglichkeit besteht, die Maschine mit einem Joystick oder einem Fahrpedal zu steuern.

Das mit der vorliegenden Erfindung beschriebene und definierte landwirtschaftliche Fahrzeug ist in einer Weise ausgestattet, dass es entweder mit dem Fahrpedal sowie dem Bremspedal oder mit dem Joystick bzw. Handhebel gefahren werden kann. Ein Umschalten erfolgt hierbei ohne zusätzliche Betätigung eines separaten Schalters o. dgl., sondern vorrangig nur auf Grundlage einer Auswertung der vom Fahrzeugführer vorgenommenen Betätigungsschritte, nämlich durch Zwischenschaltung der Vorrangsteuerung, deren Ausgangssignal zur Generierung eines Geschwindigkeitssollsignals in der Steuereinrichtung verwendet wird, die wiederum ein geeignetes Motorsteuersignal sowie ggf. ein Bremssignal generiert, um die Antriebsmaschine sowie ggf. die Betriebsbremsen des Fahrzeugs entsprechend anzusteuern. Die vorliegende Erfindung liefert somit ein Verfahren und einen Satz von Betätigungseinrichtungen für eine landwirtschaftliche Maschine oder Zugmaschine, bei der die jeweilige Betätigung des Fußpedalsatzes oder des Handhebels mit Hilfe der Vorrangsteuerung jeweils definiert, welches dieser unterschiedlichen Betätigungselemente - die Pedale oder der Handhebel - aktiviert und welche deaktiviert werden. Die Entscheidung über die Aktivierung eines der Betätigungselemente (für Fuß- oder Handbetätigung) und die gleichzeitige Deaktivierung des jeweils anderen Betätigungselementes (für Hand- oder

Fu ßbetätigung) wird im Wesentlichen auf Grundlage des zuletzt erfolgten Betätigungseingriffes durch den Maschinenführer getroffen, wobei zusätzliche Einschränkungen überlagert sein können wie bspw. die Fahrgeschwindigkeit und/oder ein betätigter Fahrtrichtungsschalter.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Darstellung eines landwirtschaftlichen Zugfahrzeuges mit Eingabemitteln zur Steuerung einer Fahrgeschwindigkeit.

Fig. 2 zeigt eine Innenansicht eines Fahrerhauses der landwirtschaftlichen Zugmaschine, wie sie sich einem Fahrzeugführer darstellt.

Gleiche oder gleich wirkende Elemente der Erfindung sind jeweils mit gleichen Bezugsziffern bezeichnet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

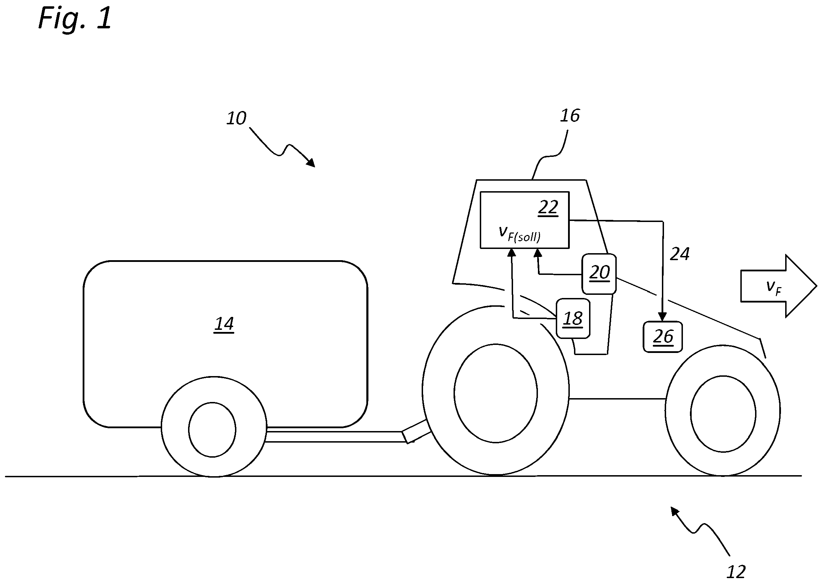

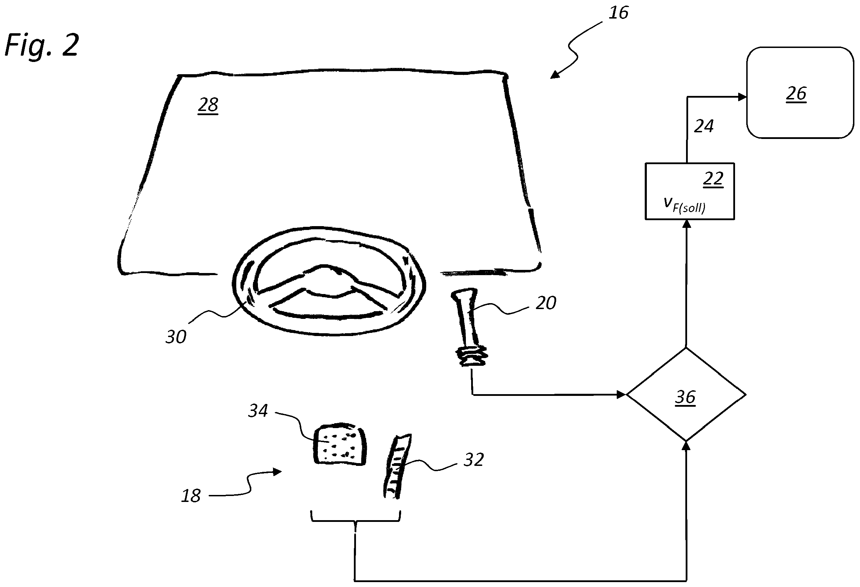

Die schematische Darstellung der Fig. 1 verdeutlicht ein Ausführungsbeispiel einer landwirtschaftlichen Maschine 10, hier einer landwirtschaftlichen Zugmaschine 12 mit angehängtem Anhänger 14. Die landwirtschaftliche Zugmaschine 12 weist ein Fahrerhaus 16 mit einem Sitzplatz und Kommandostand für einen Maschinenführer auf, dessen grundsätzliche Gestaltung an sich bekannt ist, sich jedoch auch aus der schematischen Darstellung der Fig. 2 ergibt. Im Fahrerhaus 16 und in Reichweite des sitzenden Fahrers bzw. Maschinenführers befindet sich ein Fußpedalsatz 18 sowie ein Handhebel 20, der wie ein sog. Joystick gestaltet sein kann. Der Fußpedalsatz 18 sowie der Handhebel 20 sind signaltechnisch mit einer Steuereinrichtung 22 gekoppelt, mit der aus den Betätigungsvorgaben der Fußpedale 18 und/oder des Handhebels 20 ein Sollsignal v_{F(soll)} für eine Fahrgeschwindigkeit v_{F} der Zugmaschine 12 gebildet. Aus diesem Geschwindigkeitssollsignal v_{F(soll)} wird in der Steuereinrichtung 22 ein Antriebssteuerungssignal 24 generiert, das an eine Steuerung der Antriebsmaschine 26 der Zugmaschine 12 übermittelt wird. Das Antriebssteuerungssignal 24 kann im Bereich der Antriebsmaschine 26 bspw. als Motorsteuersignal, ähnlich einer sog. Tempomatregelung wirken, mit der die Geschwindigkeit v_{F} konstant gehalten oder entsprechend den Steuerungsvorgaben der Eingabemittel 18 und 20 verändert werden kann. Das Antriebssteuerungssignal 24 kann jedoch wahlweise auch ein Getriebesteuerungssignal umfassen, so dass je nach Bedarf und baulichen Voraussetzungen mit der Antriebssteuerung auf die Motordrehzahl und/oder auf eine Veränderung der Getriebeübersetzung eingewirkt werden kann.

Die schematische Darstellung der Fig. 2 zeigt eine Innenansicht eines Fahrerhauses 16 der landwirtschaftlichen Zugmaschine 12, wie sie sich einem Fahrzeugführer beim Blick durch eine Frontscheibe 28 darstellt. Die wesentlichen Bedienelemente zur Steuerung des Fahrzeugs sind ein Lenkrad 30, der Fußpedalsatz 18 zur Fußbetätigung durch den Fahrer, der wenigstens ein Fahrpedal 32 sowie ein Bremspedal 34 umfasst. Darüber hinaus befindet sich in Reichweite des Fahrers der Handhebel 20, der einem Joystick ähneln kann und durch vor- und rückwärtiges Schwenken ein Beschleunigen oder Verzögern des Fahrzeuges bewirken kann. Sinnvollerweise befindet sich der Handhebel 20 in bequemer Reichweite für den Fahrer, bspw. in Nähe des Lenkrades 30.

Durch Niederdrücken des Fahrpedals 32, des sog. Gaspedals, lässt sich die Fahrgeschwindigkeit erhöhen, wogegen sich die Fahrgeschwindigkeit durch Lösen des Pedals 32 reduzieren lässt, indem der Antriebsmotor 26 der landwirtschaftlichen Maschine 12 (vgl. Fig. 1) in einen Schub- oder Schleppbetrieb übergeht (Motorbremse). Durch Treten des Bremspedals 34 kann die Fahrgeschwindigkeit aktiv reduziert werden, indem das Bremspedal 34 eine Aktivierung der Radbremsen und/oder aktiver Bremseinrichtungen des Fahrzeugs, z.B. eine Dauerbremse, auslöst. Der Handhebel 20 kann zur Erhöhung der Fahrgeschwindigkeit nach vorne gedrückt und zur Reduzierung der Fahrgeschwindigkeit zum Fahrer hin gezogen werden, wobei diese Fahrgeschwindigkeitsreduzierung wahlweise nur auf einer aktivierten Motorbremse oder auch auf einer zusätzlichen Aktivierung der Betriebsbremsen bzw. der Radbremsen des Fahrzeuges beruhen kann.

Wie es die Fig. 2 andeutet, wird in einer Vorrangsteuerung 36 zunächst ermittelt, durch welches der beiden Eingabealternativen - die Fußbetätigung durch den Pedalsatz 18 oder die Handbetätigung durch den Handhebel 20 - der Fahrer eine Geschwindigkeitsänderung angefordert hat. Dadurch kann gewährleistet werden, dass die jeweils zuletzt erfolgte Betätigung eines der Fußpedale 32 oder 34 oder des Handhebels 20 durch den Maschinenführer mit einer Änderungsanforderung der Fahrgeschwindigkeit v_{F} vorrangig als Eingabe akzeptiert wird, wobei gleichzeitig eine Verbindung der Fahrgeschwindigkeitssteuerung 22 zur jeweils anderen Betätigungsart zumindest solange unterdrückt wird, bis durch den Maschinenführer eine geänderte Anforderung durch entsprechende Betätigung eines der Fußpedale 32 oder 34 oder des Handhebels 20 erfolgt.

Das landwirtschaftliche Fahrzeug 10 ist so ausgestattet, dass es entweder mit dem Fahrpedal 32 sowie dem Bremspedal 34 oder mit dem Joystick bzw. Handhebel 20 gefahren werden kann. Ein Umschalten erfolgt hierbei ohne zusätzliche Betätigung eines separaten Schalters o. dgl., sondern vorrangig nur auf Grundlage einer Auswertung der vom Fahrzeugführer vorgenommenen Betätigungsschritte, nämlich durch Zwischenschaltung der Vorrangsteuerung 36, deren Ausgangssignal zur Generierung des Geschwindigkeitssollsignals v_{F(soll)} in der Steuereinrichtung verwendet wird, die wiederum gemäß Fig. 1 ein Motorsteuersignal 24 (sowie ggf. ein Bremssignal; nicht dargestellt) generiert, um die Antriebsmaschine 26 (sowie ggf. hier nicht dargestellte Betriebsbremsen) entsprechend anzusteuern.

Die vorliegende Erfindung liefert somit ein Verfahren und einen Satz von Betätigungseinrichtungen für eine landwirtschaftliche Maschine 10 oder Zugmaschine 12, bei der die jeweilige Betätigung des Fußpedalsatzes 18 oder des Handhebels 20 mit Hilfe der Vorrangsteuerung 36 jeweils definiert, welches dieser unterschiedlichen Betätigungselemente - die Pedale 18 oder der Handhebel 20 - aktiviert und welche deaktiviert werden. Die Entscheidung über die Aktivierung eines der Betätigungselemente (für Fuß- oder Handbetätigung) und die gleichzeitige Deaktivierung des jeweils anderen Betätigungselementes (für Hand- oder Fußbetätigung) wird im Wesentlichen auf Grundlage des zuletzt erfolgten Betätigungseingriffes durch den Maschinenführer getroffen, wobei zusätzliche Einschränkungen überlagert sein können wie bspw. die Fahrgeschwindigkeit und/oder ein betätigter Fahrtrichtungsschalter.

Es sei an dieser Stelle darauf hingewiesen, dass die Erfindung zwar unter Bezugnahme auf eine bevorzugte Ausführungsform beschrieben wurde, es aber gleichwohl für einen Fachmann vorstellbar ist, Abwandlungen oder Änderungen der Erfindung vorzusehen, ohne dabei den Schutzbereich der nachstehenden Ansprüche zu verlassen. Zudem sei darauf hingewiesen, dass die Erfindung in allen ihren Ausprägungen und Prinzipien auf verschiedene selbstfahrende Maschinen aller Art anwendbar ist.

### Bezuaszeichenliste:

- 10: landwirtschaftlichen Maschine
- 12: landwirtschaftliche Zugmaschine
- 14: Anhänger
- 16: Fahrerhaus
- 18: Fußpedale, Fußpedalsatz
- 20: Handhebel
- 22: Steuereinrichtung
- 24: Antriebssteuerungssignal
- 26: Antriebsmaschine, Antriebsmotor
- 28: Frontscheibe
- 30: Lenkrad
- 32: Fahrpedal, Gaspedal
- 34: Bremspedal
- 36: Vorrangsteuerung

## Patentansprüche

1. Verfahren zur Steuerung einer Fahrgeschwindigkeit (v_{F}) einer landwirtschaftlichen Maschine (10), insbesondere einer landwirtschaftlichen Zugmaschine (12) oder selbstfahrenden Arbeitsmaschine, die an einem Fahrerplatz zumindest mit einem Fahrpedal (32) und einem Bremspedal (34) zur Fußbetätigung sowie mit wenigstens einem Handhebel (20) ausgestattet ist, wobei die Pedale (32, 34) und der Handhebel (20) jeweils der Beeinflussung der Fahrgeschwindigkeit (v_{F}) durch entsprechende Fahrbefehle des Maschinenführers dienen,
**dadurch gekennzeichnet, dass** die jeweils zuletzt erfolgte Betätigung eines der Fußpedale (32, 34) oder des Handhebels (20) durch den Maschinenführer mit einer Änderungsanforderung der Fahrgeschwindigkeit (v_{F}) die jeweils aktive Betätigungsart für Hand- oder Fußsteuerung definiert und eine Verbindung der Fahrgeschwindigkeitssteuerung zur jeweils anderen Betätigungsart zumindest solange unterdrückt, bis durch den Maschinenführer eine geänderte Anforderung durch entsprechende Betätigung mittels Treten und/oder Lösen eines der Fußpedale (32, 34) oder mittels Drücken des Handhebels (20) erfolgt, und wobei eine Betätigung eines der Fußpedale (32, 34) oder des Handhebels (20) mit einer gleichzeitig erfolgenden definierten Lageänderung als Änderungsanforderung interpretiert wird, welche darüber bestimmt, ob die Fußpedale (32, 34) oder der Handhebel (20) das jeweils aktive Betätigungselement bilden.

2. Verfahren nach Anspruch 1, bei dem eine Betätigung eines der Fußpedale (32, 34) oder des Handhebels (20) mit einer gleichzeitig erfolgenden definierten Lageänderung als Änderungsanforderung interpretiert wird, welche eine Vorrangsteuerung (36) des jeweils betätigten Pedals (32, 34) oder des Handhebels (20) auslöst.

3. Verfahren nach Anspruch 2, bei dem die Fußpedale (32, 34) nach einer Betätigung des Vorwahlschalters durch den Maschinenführer einen Vorrang gegenüber dem Handhebel (20) erhalten.

4. Verfahren nach einem der Ansprüche 1 bis 3, bei dem mittels einer Vorwahl durch ein Steuerungsprogramm und/oder durch Überschreiten einer definierbaren Grenzgeschwindigkeit zwischen einer Straßenfahrt und einer Feldfahrt unterschieden wird, was gleichzeitig mit einer geänderten Vorrangsteuerung (36) verknüpft wird.

5. Verfahren nach Anspruch 4, bei dem während einer Straßenfahrt und/oder bei Überschreiten der definierten Grenzgeschwindigkeit die Maschinensteuerung mittels Handhebel (20) deaktiviert und durch die Maschinensteuerung mittels Fußpedale (32, 34) ersetzt wird.

6. Landwirtschaftliche Maschine (10), insbesondere landwirtschaftliche Zugmaschine (12) oder selbstfahrende Arbeitsmaschine, die an einem Fahrerplatz zumindest mit einem Fahrpedal (32) und einem Bremspedal (34) zur Fußbetätigung sowie mit wenigstens einem Handhebel (20) ausgestattet ist,
wobei die Pedale (32, 34) und der Handhebel (20) jeweils der Beeinflussung einer Fahrgeschwindigkeit (v_{F}) durch entsprechende Fahrbefehle des Maschinenführers dienen, wobei die Fußpedale (32, 34) und der Handhebel (20) mit einer Steuerungseinrichtung (22) verknüpft sind,
**dadurch gekennzeichnet, dass** die Steuerungseinrichtung (22) eine implementierte Vorrangsteuerung (36) aufweist, mittels welcher die die Pedale oder der Handhebel aktiviert und deaktiviert werden, wobei die Vorrangsteuerung (36) eine Analyse auf Grundlage der jeweils zuletzt erfolgten Betätigung eines der Fußpedale (32, 34) oder des Handhebels (20) durch den Maschinenführer mit einer Änderungsanforderung der Fahrgeschwindigkeit (v_{F}) vorsieht,
wobei eine Betätigung eines der Fußpedale (32, 34) oder des Handhebels (20) mit einer gleichzeitig erfolgenden definierten Lageänderung als Änderungsanforderung interpretiert wird, welche darüber bestimmt, ob die Fußpedale (32, 34) oder der Handhebel (20) das jeweils aktive Betätigungselement bilden.

7. Landwirtschaftliche Maschine nach Anspruch 6, bei der die Steuerungseinrichtung (22) eine Vorwahl und/oder eine definierbare Grenzgeschwindigkeit zur Unterscheidung zwischen einer Straßenfahrt und einer Feldfahrt berücksichtigt.

8. Landwirtschaftliche Maschine nach Anspruch 7, bei der bei einer Straßenfahrt und/oder bei einer Fahrt mit einer Geschwindigkeit oberhalb der definierten Grenzgeschwindigkeit eine Handhebelsteuerung unterdrückt ist.

## Claims

1. A method for the control of a driving speed (v_{F}) of an agricultural machine (10), in particular, of an agricultural towing machine (12) or self-propelled work machine, which is equipped at a driving position with at least an accelerator pedal (32) and a brake pedal (34) for foot actuation as well as with at least one hand lever (20), wherein the pedals (32, 34) and the hand lever (20) each serve to influence the driving speed (v_{F}) by corresponding drive commands from the machine operator,
**characterised in that** the in each case most recently carried out actuation of one of the foot pedals (32, 34) or of the hand lever (20) by the machine operator with a change request of the driving speed (v_{F}) defines the in each case active actuation mode for hand control or foot control, and suppresses a connection of the travel speed control to the respective other actuation mode for at least as long as a changed request is carried out by the machine operator by corresponding actuation by means of stepping on and/or releasing one of the foot pedals (32, 34) or by means of pressing the hand lever (20), and wherein an actuation of one of the foot pedals (32, 34) or of the hand lever (20) with a simultaneously carried out defined position change is interpreted as change request, which determines whether the foot pedals (32, 34) or the hand lever (20) form the respectively active actuation element.

2. The method according to claim 1, in which an actuation of one of the foot pedals (32, 34) or of the hand lever (20) with a simultaneously carried out defined position change is interpreted as change request, which triggers a priority control (36) of the respectively actuated pedal (32, 34) or of the hand lever (20).

3. The method according to claim 2, in which the foot pedals (32, 34) are given priority over the hand lever (20) after an actuation of the preselection switch by the machine operator.

4. The method according to one of the claims 1 to 3, in which a distinction is made between a road drive and a field drive by means of a preselection by a control programme and/or by exceeding a definable limit speed, which procedure is simultaneously linked with a changed priority control (36).

5. The method according to claim 4, in which the machine control by means of hand lever (20) is deactivated and replaced by the machine control by means of foot pedals (32, 34) during a road drive and/or when the defined limit speed is exceeded.

6. An agricultural machine (10), in particular, an agricultural towing machine (12) or self-propelled work machine, which is equipped at a driving position with at least an accelerator pedal (32) and a brake pedal (34) for foot actuation as well as with at least one hand lever (20), wherein the pedals (32, 34) and the hand lever (20) each serve to influence a driving speed (v_{F}) by corresponding drive commands from the machine operator, wherein the foot pedals (32, 34) and the hand lever (20) are linked with a control device (22),
**characterised in that** the control device (22) has an implemented priority control (36), by means of which the pedals or the hand lever are activated and deactivated, wherein the priority control (36) provides an analysis based on the in each case most recently carried out actuation of one of the foot pedals (32, 34) or of the hand lever (20) by the machine operator with a change request of the driving speed (v_{F}),
wherein an actuation of one of the foot pedals (32, 34) or of the hand lever (20) with a simultaneously carried out defined position change is interpreted as change request, which determines whether the foot pedals (32, 34) or the hand lever (20) form the respectively active actuation element.

7. The agricultural machine according to claim 6, in which the control device (22) takes a preselection and/or a definable limit speed into account for the distinction between a road drive and a field drive.

8. The agricultural machine according to claim 7, in which a hand lever control is suppressed in a road drive and/or in a drive at a speed above the defined limit speed.

## Revendications

1. Procédé de commande d'une vitesse de conduite (v_{F}) d'une machine agricole (10), en particulier d'un engin de traction agricole (12) ou d'un engin de travail automoteur qui est équipé, sur une place de conducteur, au moins d'une pédale d'accélérateur (32) et d'une pédale de frein (34 ) pour une commande au pied ainsi que d'au moins un levier à main (20), dans lequel les pédales (32, 34) et le levier à main (20) servent chacun à influencer la vitesse de conduite (v_{F}) par des commandes de conduite correspondantes du machniniste,
**caractérisé par le fait que** l'actionnement de l'une des pédales (32, 34) ou du levier à main (20), qui a été effectué en dernier par le machiniste avec une demande de changement de la vitesse de conduite(v_{F}) définit le type d'actionnement respectivement actif pour la commande manuelle ou au pied et supprime une liaison de la commande de vitesse de conduite à l'autre type d'actionnement respectif au moins jusqu'à ce que le machiniste fasse une demande de changement par un actionnement correspondant en appuyant et/ou en relâchant l'une des pédales (32, 34) ou en appuyant sur le levier à main (20), et dans lequel un actionnement de l'une des pédales (32, 34) ou du levier à main (20) avec un changement de position défini se produisant en même temps est interprété comme une demande de changement qui détermine si les pédales (32, 34) ou le levier à main (20) constituent l'élément d'actionnement respectivement actif.

2. Procédé selon la revendication 1, dans lequel un actionnement de l'une des pédales (32, 34) ou du levier à main (20) avec un changement de position défini se produisant en même temps est interprété comme une demande de changement qui déclenche une commande prioritaire (36) de la pédale (32, 34) respectivement actionnée ou du levier à main (20).

3. Procédé selon la revendication 2, dans lequel les pédales (32, 34) sont prioritaires sur le levier à main (20) après que le commutateur de présélection a été actionné par le machiniste.

4. Procédé selon l'une quelconque des revendications 1 à 3, dans lequel on distingue une conduite sur la route et une conduite dans les champs au moyen d'une présélection par un programme de commande et/ou par dépassement d'une vitesse limite définissable, ce qui est simultanément liée à une commande prioritaire modifiée (36).

5. Procédé selon la revendication 4, dans lequel, pendant une conduite sur la route et/ou lorsque la vitesse limite définie est dépassée, la commande de machine est désactivée au moyen du levier à main (20) et est remplacée par la commande de machine au moyen des pédales (32, 34).

6. Machine agricole (10), en particulier engin de traction agricole (12) ou engin de travail automoteur qui est équipé, sur une place de conducteur, au moins d'une pédale d'accélérateur (32) et d'une pédale de frein (34 ) pour une commande au pied ainsi que d'au moins un levier à main (20), dans lequel les pédales (32, 34) et le levier à main (20) servent chacun à influencer une vitesse de conduite (v_{F}) par des commandes de conduite correspondantes du machniniste, les pédales (32, 34) et le levier à main (20) étant liés à un dispositif de commande (22),
**caractérisée par le fait que** le dispositif de commande (22) présente une commande prioritaire (36) implémentée au moyen de laquelle les pédales ou le levier à main sont activés et désactivés, dans laquelle la commande prioritaire (36) prévoit une analyse sur la base de l'actionnement de l'une des pédales (32, 34) ou du levier à main (20) qui a été effectué en dernier par le machiniste avec une demande de changement de la vitesse de conduite (v_{F}),
dans lequel un actionnement de l'une des pédales (32, 34) ou du levier à main (20) avec un changement de position défini se produisant en même temps est interprété comme une demande de changement qui détermine si les pédales (32, 34) ou le levier à main (20) constituent l'élément d'actionnement respectivement actif.

7. Machine agricole selon la revendication 6, dans laquelle le dispositif de commande (22) prend en compte une présélection et/ou une vitesse limite définissable pour distinguer une conduite sur la route et une conduite dans les champs.

8. Machine agricole selon la revendication 7, dans laquelle une commande à levier à main est supprimée lors d'une conduite sur la route et/ou lors d'une conduite à une vitesse supérieure à la vitesse limite définie.
